(19) **Europäisches Patentamt / European Patent Office / Office européen des brevets**

(11) **EP 3 774 407 B1**

(12) **FASCICULE DE BREVET EUROPEEN**

(45) Date de publication et mention
de la délivrance du brevet:
**07.09.2022 Bulletin 2022/36**

(21) Numéro de dépôt: **19719557.1**

(22) Date de dépôt: **27.03.2019**

(51) Classification Internationale des Brevets (IPC):
**B60C 23/04** (2006.01)   **C08K 3/04** (2006.01)
**C08L 23/22** (2006.01)   **C08F 10/08** (2006.01)
**B29D 30/00** (2006.01)

(52) Classification Coopérative des Brevets (CPC):
(C-Sets disponibles)
**B60C 23/0493; B29D 30/0061;** B29D 2030/0072;
B60C 2019/004                                    (Cont.)

(86) Numéro de dépôt international:
**PCT/FR2019/050709**

(87) Numéro de publication internationale:
**WO 2019/186069 (03.10.2019 Gazette 2019/40)**

(54) **PATCH ET PROCEDE DE FIXATION D'UN ORGANE ELECTRONIQUE A LA SURFACE D'UN PNEUMATIQUE**

**PFLASTER UND VERFAHREN ZUR BEFESTIGUNG EINES ELEKTRONISCHEN ELEMENTS AN DER OBERFLÄCHE EINES REIFENS**

**PATCH AND METHOD FOR FIXING AN ELECTRONIC MEMBER TO THE SURFACE OF A TYRE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2018 FR 1852711**

(43) Date de publication de la demande:
**17.02.2021 Bulletin 2021/07**

(73) Titulaire: **COMPAGNIE GENERALE DES ETABLISSEMENTS MICHELIN**
**63000 Clermont-Ferrand (FR)**

(72) Inventeurs:
• **LAUBRY, Philippe**
**63040 CLERMONT-FERRAND Cedex 9 (FR)**
• **FAGOT-REVURAT, Lionel**
**63040 CLERMONT-FERRAND Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 2 223 814       EP-A1- 2 845 751**
**WO-A1-2008/116523**

(52) Classification Coopérative des Brevets (CPC):
   (Cont.)

   C-Sets
   C08F 210/10, C08F 236/08

## Description

### Domaine de l'invention

La présente invention est relative aux pneumatiques équipés d'un organe électronique, tel un capteur de pression, fixé à leur surface.

### État de la technique

Plus précisément, l'invention concerne un patch caoutchouteux de fixation de cet organe électronique à la surface du pneumatique ainsi qu'à son procédé de fixation.

Dans le cas de véhicules de tourisme de forte puissance et très rapides, le développement de ces organes est limité par les conséquences néfastes que peuvent entraîner la fixation de tels organes à leur surface, notamment en termes d'échauffements locaux lors de roulages à très hautes vitesses.

Pour répondre à ces problématiques, le document EP 2 346 706 B1 présente un pneumatique comportant un organe électronique lié à sa surface intérieure par un patch caoutchouteux à base d'un caoutchouc diénique synthétique et d'un caoutchouc butyle halogéné. WO2008/116523 A et EP 2 845 751 A décrivent également des pneumatiques comportant un patch en caoutchouc muni d'une ouverture adaptée à l'insertion d'un organe électronique.

Mais ces patchs caoutchouteux peuvent ne pas répondre à toutes les conditions rencontrées.

### Description brève de l'invention

L'invention a pour l'un de ses objets un patch caoutchouteux adapté à la problématique de la fixation d'un organe électronique à la surface d'un pneumatique de tourisme dans le cas de véhicules de fortes puissances et très rapides.

Ce patch caoutchouteux comporte une semelle et une paroi de maintien liée à la semelle et définissant un volume interne apte à accueillir l'organe électronique. Ce patch est caractérisé en ce qu'il est à base d'un caoutchouc butyle non-halogéné et en ce que le caoutchouc butyle non-halogéné est le seul élastomère du mélange constituant le patch.

Ce choix présente deux avantages importants. Tout d'abord, le patch résultant présente une hystérèse inférieure à un patch similaire réalisé à base d'un caoutchouc butyle halogéné et cela permet de limiter les échauffements locaux lors de roulages à très hautes vitesses. En effet le butyl non halogéné est par nature moins hystérétique que le butyl halogéné. Pour de fortes sollicitations mécaniques comme rencontrées lors de roulages à très hautes vitesses, la différence est telle que l'échauffement du patch est très différencié selon la nature même de celui-ci. Ces fortes sollicitations mécaniques exercées sur le patch caoutchouteux sont entre autres générées par les forces d'inertie radiales, longitudinales et transversales du fait du passage dans l'air de contact générées par l'organe électronique lorsque celui-ci est inséré au sein du patch caoutchouteux. Cet organe électronique, comme les TMS (acronyme en anglais de Tire Mounted Sensor), ayant une masse au moins deux fois supérieure à celle du patch caoutchouteux, ces efforts sont importants et d'autant plus à hautes vitesses. On met alors en évidence les caractéristiques d'hystérèse du matériau du patch caoutchouteux.

Le deuxième avantage est la remarquable stabilité de la rigidité mécanique du patch résultant lors de roulages à température élevée comme c'est le cas lors de roulages à très hautes vitesses et en conséquence, on n'a pas observé de déformation rémanente après des tests à très hautes vitesses. En effet, en raison des fortes sollicitations mécaniques lors de roulage à très hautes vitesses et des propriétés d'hystérèse du matériau du patch, une élévation de la température du matériau du patch est observée. Le butyl halogéné n'est pas stable chimiquement sous température élevée, lié à certaines positions plus réactives de l'halogène sur la chaîne polymérique, ce qui engendre des ruptures de chaine polymérique. Ces ruptures de chaîne ne permettent pas alors au matériau de retrouver sa forme initiale après sollicitations ce qui génèrent des déformations rémanentes du patch. Ces déformations sont alors gênantes pour le maintien de l'organe électronique au sein du patch lorsque l'organe électronique est simplement maintenu en position par le patch par serrage. Dans le cas du butyl non halogéné, il est chimiquement plus stable dans les mêmes gammes de température ne générant pas de rupture de chaine du polymère. De plus, il chauffe moins. De ce fait, la température du matériau du patch est moins élevé ce qui est encore plus favorable pour sa stabilité chimique. Ainsi, le butyl non halogéné permet un retour à la forme initiale du patch après des roulages à très hautes vitesses ce qui permet de conserver la fonction de maintien pendant la vie du patch caoutchouteux. De ce fait, le butyl non halogéné assure une stabilité de la rigidité mécanique sans autant voire aucune déformation rémanente par rapport au butyl halogéné.

Selon un mode d'utilisation préférentiel, le patch caoutchouteux est destiné à être fixé avant cuisson à la surface interne d'un pneumatique réalisé par assemblage successif de ses constituants sur un noyau rigide tel que décrit dans le document EP 0 264 600 B1. Le noyau rigide comporte une cavité ménagée sur sa surface extérieure adaptée pour recevoir le patch caoutchouteux. Préférentiellement, la surface extérieure de la semelle du patch caoutchouteux a une géométrie adaptée à la géométrie de la surface extérieure du noyau rigide.

Préférentiellement, la surface extérieure de la semelle du patch caoutchouteux a une forme torique convexe dont le rayon de courbure le plus petit est compris entre 0,2 et 0,6 mètre, préférentiellement entre 0,3 et 0,5 mètre.

Le rayon de courbure le plus petit correspondant généralement à la section de la surface torique dans un plan circonférentielle du pneumatique lorsque le patch caoutchouteux est fixé sur le pneumatique. La seconde section de la surface torique du patch correspond à l'intersection du patch caoutchouteux avec un plan radial du pneumatique lorsque le patch caoutchouteux est fixé sur le pneumatique. Généralement la surface torique est presque qu'une surface cylindrique puisque le sommet du pneumatique ou sera fixé le patch caoutchouteux présente sur sa surface intérieure une section radiale qui est quasi linéaire.

Cette adaptation de la géométrie de la semelle du patch à celle de la surface du noyau ou du pneumatique a pour but d'éviter toute surépaisseur à la surface du noyau qui pourrait pénaliser la mise en place ultérieure des bandelettes de gomme intérieure (*en anglais « inner liner »*) sur la surface du noyau pour constituer le pneumatique.

Selon un mode de réalisation préférentiel, la paroi de maintien du patch caoutchouteux comporte une nervure . Cette nervure est adaptée pour venir combler une rainure correspondante disposée sur la paroi de la cavité du noyau rigide lorsque le patch caoutchouteux est inséré dans la cavité du noyau rigide.

Cette nervure permet de bloquer en position dans la cavité du noyau le patch caoutchouteux. En conséquence, lorsque le noyau est entraîné en rotation lors de l'application des bandelettes de gomme intérieure, le patch ne risque pas d'être éjecté de sa cavité du noyau. Bien entendu, toute autre forme de moyen de blocage équivalent est aussi possible.

Selon un mode de réalisation préférentiel, le patch caoutchouteux comporte, noyé dans sa masse, un transpondeur radiofréquence.

Ce transpondeur radiofréquence est apte à transmettre à l'organe électronique adjacent l'identifiant du pneumatique stocké dans sa mémoire interne. Comme le patch caoutchouteux est pratiquement indissociable du pneumatique, cela garantit sans aucun doute possible l'identité du pneumatique. Le transpondeur radiofréquence peut être un transpondeur LF ou UHF.

Selon un mode de réalisation préférentiel, la paroi de maintien du patch caoutchouteux comporte une ouverture adaptée à l'insertion et à l'extraction d'un organe électronique.

La paroi de maintien peut comprendre, opposée à la semelle, une ouverture avec un rebord de maintien de l'organe électronique.

Selon un autre mode de réalisation préférentiel, le volume interne du patch caoutchouteux est adapté pour accueillir un organe électronique de forme oblongue.

De préférence, la section du volume interne parallèle à la semelle est de forme oblongue.

L'organe électronique adapté à ce patch n'a ainsi pas une géométrie axisymétrique ce qui garantit qu'il est possible de le mettre en place avec une orientation reproductible à la surface d'un pneumatique et qu'il ne tournera pas dans le volume interne du patch quelles que soient les sollicitations subies en roulage.

L'invention a aussi pour objet un pneumatique comportant fixé sur sa surface intérieure un patch caoutchouteux selon l'invention.

L'invention a aussi pour objet un pneumatique comportant fixé sur sa surface intérieure un patch caoutchouteux avec un volume interne de section oblongue, dans lequel la plus grande longueur de la section du volume interne est orientée selon une direction parallèle à l'axe naturel de rotation du pneumatique.

En conséquence la plus petite largeur de la section est orientée circonférentiellement ce qui limite l'influence de la présence du patch et de l'organe sur la mise à plat du pneumatique.

L'invention a aussi pour objet un procédé préférentiel de fixation d'un organe électronique à la surface interne d'un pneumatique dans le cas particulier où le pneumatique est réalisé par assemblage successif de ses constituants sur un noyau rigide, tel que décrit par exemple dans le document EP 0 264 600 B1. Ce procédé comporte les étapes suivantes :

- considérer un patch caoutchouteux avec une semelle et une paroi de maintien liée à ladite semelle et définissant un volume interne apte à accueillir l'organe électronique, comme précédemment décrit ;
- prévulcaniser le patch caoutchouteux à un indice d'avancement de la vulcanisation alpha supérieur à 0,5 ;
- mettre en place le patch prévulcanisé dans une cavité ménagée à la surface du noyau rigide et adaptée à la géométrie du patch caoutchouteux ;
- mettre en place successivement l'ensemble des constituants du pneumatique sur le noyau rigide pour obtenir un pneumatique non vulcanisé ;
- vulcaniser le pneumatique dans un moule de cuisson ; et
- sortir le pneumatique du moule de cuisson.

Par indice d'avancement de la vulcanisation alpha, on entend, dans un test de rhéométrie tel que décrit ci-dessous, le rapport entre le couple atteint à un temps de test $T_\alpha$ diminué du couple minimum et l'écart entre le couple maximum et le couple minimum.

L'utilisation d'un patch à base d'un caoutchouc butyle non-halogéné permet de limiter l'hystérèse du patch en roulage et la pré-vulcanisation a l'avantage de maintenir la forme du patch pendant les phases d'assemblage du pneumatique sur le noyau rigide ainsi que pendant la phase de vulcanisation du pneumatique. De plus, le patch étant prévulcanisé en dehors de la cuisson du pneumatique, la présence d'halogène pour accélérer la cuisson du patch n'est pas nécessaire . Le temps de cuisson du pneumatique est suffisante pour finir la cuisson du patch et assurer une co-vulcanisation de l'ensemble pneumatique et patch caoutchouteux.

En dessous d'un indice d'avancement de la vulcanisation alpha de 0,5, le maintien de la forme du patch caoutchouteux n'est pas garanti.

De préférence, l'indice d'avancement de la vulcanisation alpha du patch caoutchouteux prévulcanisé est inférieur à 0,9. Cela permet de conserver un potentiel de co-vulcanisation suffisant pendant la cuisson de l'ensemble pneumatique et patch caoutchouteux.

De préférence, l'indice d'avancement de la vulcanisation alpha du patch caoutchouteux prévulcanisé est compris entre 0,7 et 0,8.

Selon un mode de réalisation préférentiel, avant de mettre en place le patch caoutchouteux prévulcanisé dans la cavité ménagée à la surface du noyau rigide, on place un objet rigide et inerte thermiquement de géométrie identique à la géométrie de l'organe électronique à l'intérieur du volume interne du patch caoutchouteux prévulcanisé.

Puis, après avoir sorti le pneumatique du moule de cuisson, on retire l'objet rigide et inerte thermiquement du volume interne du patch caoutchouteux et on insère à l'intérieur du volume interne du patch caoutchouteux l'organe électronique.

Ce mode de réalisation préférentiel permet de ne pas faire subir à l'organe électronique une phase de cuisson à température élevée.

Ce mode de réalisation est particulièrement adapté lorsque la géométrie du patch caoutchouteux permet l'insertion et l'extraction de l'organe électronique lorsque le patch est fixé à la surface interne du pneumatique. Une telle géométrie de patch caoutchouteux est présentée notamment dans le document WO2008116523 A1.

## Description des Figures

Les figures annexées illustrent :

- la figure 1 présente une coupe schématique partielle d'un pneumatique avec fixé sur sa surface intérieure un patch caoutchouteux de fixation d'un organe électronique ;
- la figure 2 présente une vue en perspective d'un patch caoutchouteux ;
- la figure 3 présente une vue en coupe du patch de la figure 2 ;
- la figure 4 présente une vue en perspective d'une pièce d'un noyau rigide d'assemblage avec une cavité d'insertion d'un patch ;
- la figure 5 présente une vue en coupe d'un patch inséré dans une pièce de noyau rigide ;
- la figure 6 présente une courbe de rhéométrie d'un mélange testé ; et
- la figure 7 présente, vu en coupe, un mode de réalisation d'un patch de fixation d'un organe électronique à section non-axisymétrique et comportant un tag RFID.

## Description détaillée de l'invention

Dans la présente description, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Le patch caoutchouteux selon l'un des objets de l'invention a pour caractéristiques essentielles d'être à base d'un caoutchouc butyle non-halogéné, et ce caoutchouc butyle non-halogéné d'être le seul élastomère du mélange constituant du patch.

Par caoutchouc butyle, on entend usuellement un copolymère d'isobutylène avec de l'isoprène (le caoutchouc butyle fait ainsi partie des élastomères diéniques), ainsi que les dérivés halogénés, en particulier généralement bromés ou chlorés, de ces copolymères d'isobutylène et isoprène.

On citera à titre d'exemples de caoutchouc butyle : les copolymères d'isobutylène et d'isoprène (IIR), les caoutchoucs bromo-butyle tels que le copolymère bromo-isobutylène-isoprène (BIIR) et les caoutchoucs chloro-butyle tels que le copolymère chloro-isobutylène-isoprène (CIIR).

Par extension de la définition précédente, on peut également englober sous l'appellation « caoutchouc butyle » des copolymères d'isobutylène et de dérivés de styrène tels que les copolymères d'isobutylène et méthylstyrène bromé (BIMS) dont fait notamment partie l'élastomère nommé « EXXPRO » commercialisé par la société Exxon.

Les caoutchoucs butyles convenant pour l'un des objets de l'invention sont limités aux copolymères d'isobutylène et d'isoprène (IIR) à l'exclusion de tout dérivé halogéné de ces copolymères.

Les patches caoutchouteux à base de caoutchouc butyle non-halogéné ont l'avantage de ne pas présenter de diminution de rigidité lorsqu'ils sont sollicités à haute température pendant une durée longue, cela entraîne qu'ils sont beaucoup moins susceptibles de présenter des déformations rémanentes que d'autres patches à base de caoutchouc butyle halogénés.

Le fait de n'avoir que du caoutchouc butyle non-halogéné présente aussi l'avantage de diminuer sensiblement l'hystérésis de ces matériaux comparativement à des caoutchoucs butyle halogénés.

À titre de rappels, un élastomère (ou indistinctement caoutchouc) « diénique », qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

L'élastomère diénique peut être essentiellement insaturé. Il s'agit particulièrement de :

(a) tout homopolymère d'un monomère diène conjugué, notamment tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone.

Préférentiellement, l'élastomère diénique est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. De tels copolymères sont plus préférentiellement choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'isoprène-styrène (SIR) et les copolymères d'isoprène-butadiène-styrène (SBIR).

Les mélanges peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

Les mélanges comportent aussi usuellement tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600).

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO2). La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g, notamment entre 60 et 300 m2/g. À titres de silices précipitées hautement dispersibles (dites « HDS »), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits « symétriques » ou « asymétriques » selon leur structure particulière, tels que décrits par exemple dans les demandes WO03/002648 (ou US 2005/016651) et WO03/002649 (ou US 2005/016650). Bien entendu pourraient être également utilisés des mélanges des agents de couplage précédemment décrits, comme décrit notamment dans la demande WO 2006/125534.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

Les mélanges comportent aussi usuellement des plastifiants. Un plastifiant est un agent plastifiant liquide (à 23°C) dont la fonction est de ramollir la matrice en diluant l'élastomère et la charge renforçante ; sa Tg est préférentiellement inférieure à -20°C, plus préférentiellement inférieure à -40°C.

Toute huile d'extension, qu'elle soit de nature aromatique ou non-aromatique, tout agent plastifiant liquide connu pour ses propriétés plastifiantes vis-à-vis d'élastomères diéniques, est utilisable. À température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Conviennent particulièrement les agents plastifiants liquides choisis dans le groupe constitué par les polymères diéniques liquides, les huiles polyoléfiniques, les huiles naphténiques, les huiles paraffiniques, les huiles DAE, les huiles MES (Médium Extracted Solvates), les huiles TDAE (Treated Distillate Aromatic Extracts), les huiles RAE (Residual Aromatic Extract oils), les huiles TRAE (Treated Residual Aromatic Extract) et les huiles SRAE (Safety Residual Aromatic Extract oils), les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

Les mélanges peuvent comporter également tout ou partie des additifs usuels, connus de l'homme de l'art et habituellement utilisés dans les compositions de caoutchouc pour pneumatiques, en particulier de flancs ou de gomme intérieure, comme par exemple des charges autres que celles précitées, des pigments, des agents de protection tels que cires anti-ozone, anti-ozonants chimiques, antioxydants, des agents antifatigue, des résines renforçantes (telles que décrites par exemple dans la demande WO 02/10269), un système de réticulation, par exemple à base de soufre et autres agents de vulcanisation, et/ou de peroxyde et/ou de bismaléimide.

Dans ce qui suit, les expressions « radialement intérieur à » et « radialement extérieur à » signifient respectivement « plus proche de l'axe de rotation du pneumatique, selon la direction radiale, que » et « plus éloigné de l'axe de rotation du pneumatique, selon la direction radiale, que ». Les expressions « axialement intérieur à » et « axialement extérieur à » signifient respectivement « plus proche du plan équatorial, selon la direction axiale, que » et « plus éloigné du plan équatorial, selon la direction axiale, que ». Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, et une « largeur axiale » est mesurée selon la direction axiale.

Un pneumatique comprend usuellement un sommet comprenant une bande roulement destinée à venir en contact avec le sol par l'intermédiaire d'une surface de roulement, deux bourrelets destinés à venir en contact avec une jante et deux flancs reliant le sommet aux bourrelets.

Un pneumatique ayant une géométrie de révolution par rapport à un axe de rotation, la géométrie du pneumatique est généralement décrite dans un plan méridien contenant l'axe de rotation du pneumatique (axe YY'). Pour un plan méridien donné, les directions radiale (ZZ'), axiale (YY') et circonférentielle (XX') désignent respectivement les directions perpendiculaire à l'axe de rotation du pneumatique, parallèle à l'axe de rotation du pneumatique et perpendiculaire au plan méridien.

Par pneumatique asymétrique, on entend des pneumatiques tels qu'un sens de montage sur le véhicule est prédéterminé par le fabricant. Ils comportent un bord axial extérieur 45 et un bord axial intérieur 46, le bord axial intérieur étant le bord destiné à être monté du côté de la caisse du véhicule lorsque le pneumatique est monté sur le véhicule selon le sens de montage prédéterminé et inversement pour le bord axial extérieur. Dans le document « côté extérieur du véhicule » désigne le bord axial extérieur.

Généralement le matériau le plus radialement intérieur sur toutes les parties du pneumatique, flancs, bourrelets et sommet, est conçu pour assurer l'étanchéité du pneumatique afin de maintenir une pression constante et également pour préserver les autres matériaux lui étant radialement extérieurs des effets du gaz de gonflage, notamment de l'oxygène. Ce matériau le plus radialement intérieur, quelle que soit sa nature, est appelé gomme intérieure (en anglais « *inner liner* »).

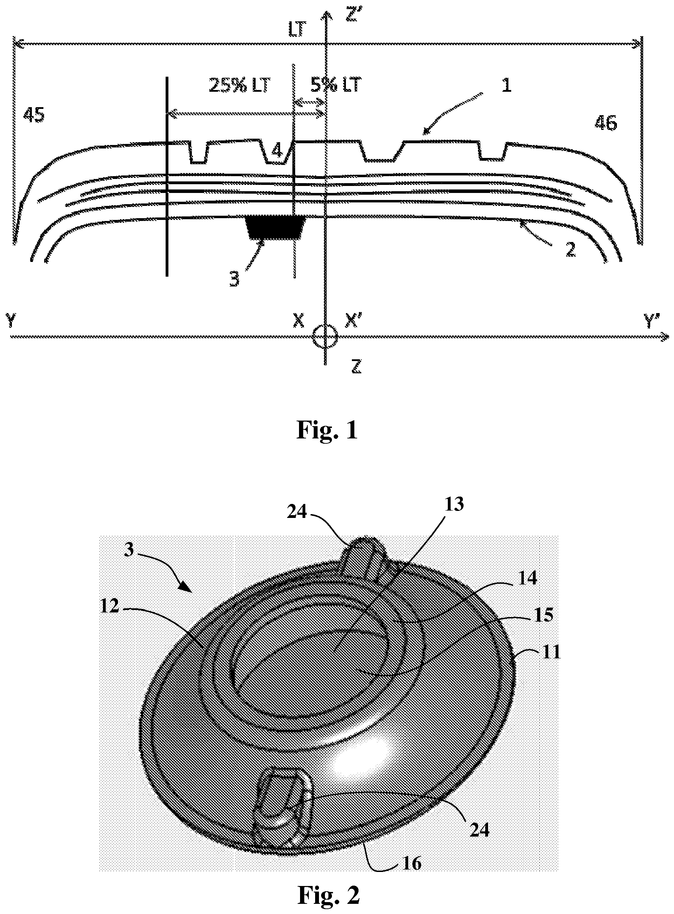

La figure 1 présente un pneumatique 1 vu en coupe méridienne partielle muni d'un patch caoutchouteux 3 de fixation d'un organe électronique collé à la surface de la gomme intérieure 2. Le pneumatique 1 est tel que le centre de gravité du patch 3 est situé du côté du bord axial 45 extérieur du véhicule par rapport au plan équatorial ou plan médian et à une distance du plan équatorial au moins égale à 5% de la largeur axiale maximale du pneumatique LT et au plus égale à 25% de cette largeur. Dans cette figure, le centre de gravité du patch 3 est situé radialement à l'aplomb de la rainure circonférentielle 4 de la bande de roulement.

Comme l'indique le document WO 2016162345, cette position du patch et de l'organe électronique permet d'améliorer sensiblement l'endurance à haute vitesse du pneumatique muni du patch et de l'organe électronique par rapport à un patch dont le centre de gravité est situé dans le plan équatorial du pneumatique.

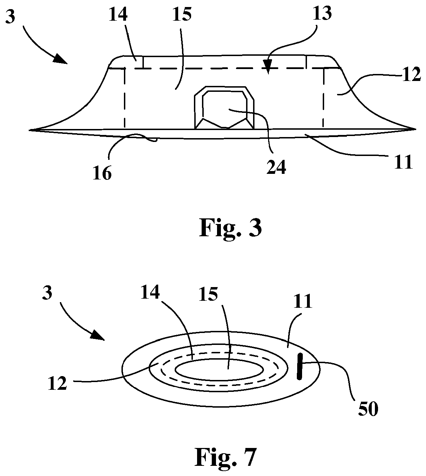

Aux figures 2 et 3, on distingue un patch 3 de fixation d'un organe électronique de type TMS (acronyme en anglais de « *Tyre Mounted System* »). Ce patch 3 comprend une semelle 11 et une paroi de maintien 12 qui constituent ensemble le patch 3.

La semelle 11 a une surface externe 16 apte à être fixée à la paroi d'un pneumatique. La paroi de maintien 12 comprend en tant que marqueurs 24 deux ergots arrondis situés de façon diamétralement opposés s'étendant radialement extérieurement à la semelle 11. Ces marqueurs 24 permettent un positionnement du patch 3 et par voie de conséquence de l'organe électronique au sein du pneumatique.

La paroi de maintien 12 comprend à l'opposé de la semelle 11 une ouverture 13 avec un rebord de maintien 14 apte à permettre l'introduction et l'extraction d'un organe électronique tel un TMS dans la cavité interne 15 du patch 3.

Selon un premier mode de fixation, la surface 16 de la semelle 11 peut être fixée à la surface d'un pneumatique, par exemple à la surface de la gomme intérieure, par l'intermédiaire de moyens de fixation standards des produits élastomères de type colle MS-Polymère (acronyme de Polyéther modifié silane), MS PDMS (acronyme de Polydiméthylsiloxane modifié Silane), ruban adhésif double faces ou gomme de liaison. Il peut alors très classiquement posé après cuisson et après avoir nettoyé la surface de la gomme intérieure du pneumatique par exemple par brossage.

Selon un mode préférentiel de ce premier mode de fixation :

- on met en place sur la semelle du patch une couche de gomme de liaison ;
- on met en place le patch sur la surface du pneumatique vulcanisé ; et
- on approche une tête chauffante pour vulcaniser à chaud la gomme de liaison.

La vulcanisation à chaud, à des températures de l'ordre de 130 à 150 degrés, de la gomme de liaison permet d'obtenir une fixation rapide du patch caoutchouteux et par conséquence de l'ensemble constitué par l'organe électronique et le patch caoutchouteux de fixation.

Mais, dans le cas de conditions d'usage très sévères et dans le cas d'un pneumatique réalisé par assemblage successif de ses constituants sur un noyau rigide, il est préférable de fixer le patch caoutchouteux avant cuisson en l'insérant dans une cavité ménagée à la surface du noyau rigide d'assemblage.

Pour cela, il est nécessaire de prévulcaniser le patch avec un indice d'avancement de vulcanisation alpha supérieur à 0,5. Cela pour que le patch conserve sa forme pendant la phase de réalisation du pneumatique.

De préférence alpha est compris entre 0,7 et 0,8. Cela pour limiter le temps de cuisson subi par le mélange caoutchouteux du patch.

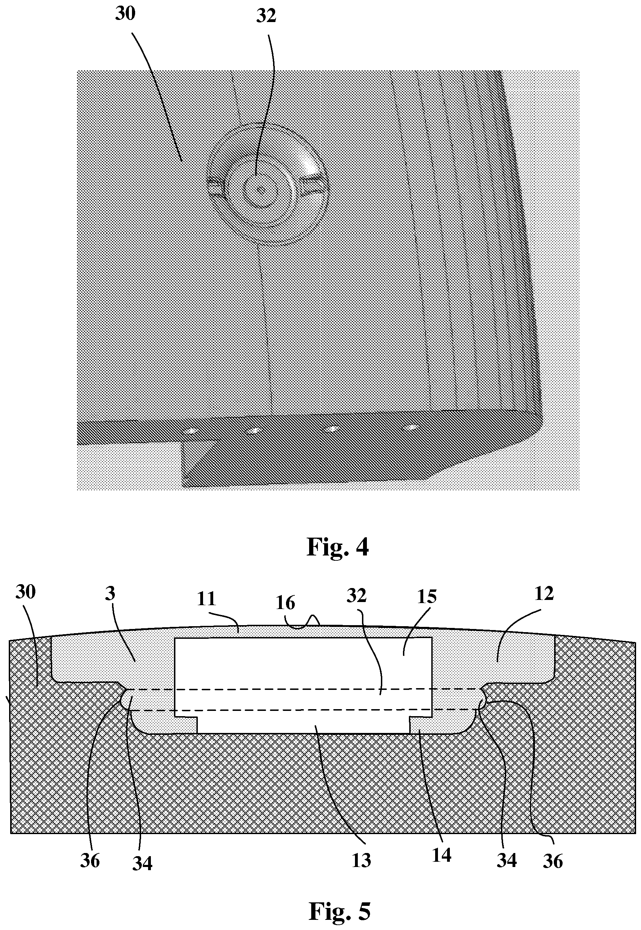

La figure 4 présente en perspective une pièce 30 d'un noyau rigide qui comporte à sa surface extérieure une cavité 32 adaptée à la forme du patch 3.

La figure 5 est une vue en coupe schématique d'un patch 3 inséré dans la cavité 32 d'une pièce 30 d'un noyau rigide d'assemblage d'un pneumatique. Il est à noter que la surface extérieure 16 de la semelle 11 du patch pré vulcanisé 3 est adaptée à la géométrie de la surface de la pièce 30 du noyau pour qu'il n'y ait aucune surépaisseur de surface. Cette surface 16 a ainsi une forme torique convexe présentant des courbures axiales et circonférentielles similaires à celles de la surface de la pièce 30. Ces rayons de courbure dans la direction circonférentielle sont de l'ordre de 0,3 à 0,5 m selon les dimensions de pneumatiques. Dans la direction axiale, les rayons de courbure sont quasi infinis en raison de la linéarité de la surface extérieure du noyau suivant la direction axiale correspondant à la section du sommet centrée sur le plan médian du pneumatique à construire où sera implanté le patch caoutchouteux. Toute surépaisseur de la semelle du patch relativement à la surface de la pièce 30 est susceptible de perturber la mise en place des bandelettes de mélange de gomme destinées à constituer la couche de gomme intérieure par enroulement en spirale.

On note aussi sur cette figure que la paroi de la cavité 32 comporte une petite rainure circulaire 36 dans laquelle vient s'encastrer une nervure 34 de la surface extérieure de la paroi de maintien 12 du patch 3. Cela a pour but de maintenir en force ou clipser le patch caoutchouteux après sa mise en place dans la cavité 32. Ce clipsage du patch dans la cavité de la pièce du noyau garantit que lors de la mise en rotation du noyau pour commencer l'assemblage de la gomme intérieure le patch 3 ne sera pas éjecté.

Lors de la cuisson du pneumatique assemblé sur un noyau rigide, les pressions de moulage sont particulièrement élevées et peuvent atteindre de l'ordre de 50 bars. Il en résulte que la qualité de l'adhésion entre la semelle du patch et la gomme intérieure est particulièrement bonne, très supérieure à un collage avec une gomme de liaison par exemple.

Tests

Rhéométrie

Les mesures sont effectuées à 150°C avec un rhéomètre à chambre oscillante, selon la norme DIN 53529 - partie 3 (juin 1983). L'évolution du couple rhéométrique, $\Delta$Couple, en fonction du temps décrit l'évolution de la rigidification de la composition due à l'avancement de la réaction de vulcanisation. Les mesures sont traitées selon la norme DIN 53529 - partie 2 (mars 1983) : $T_0$ est le délai d'induction, c'est-à-dire le temps nécessaire au début de la réaction de vulcanisation ; $T_\alpha$ (par exemple $T_{99}$) est le temps nécessaire pour atteindre une conversion de $\alpha$%, c'est-à-dire $\alpha$% (par exemple 99%) de l'écart entre les couples minimum et maximum. On mesure également la constante de vitesse de conversion notée K (exprimée en min-1), d'ordre 1, calculée entre 30% et 80% de conversion, qui permet d'apprécier la cinétique de vulcanisation.

On a :

$$\alpha = \frac{(C_{T_\alpha} - C_{min})}{(C_{max} - C_{min})}$$

avec

- $C_{T_\alpha}$ : couple rhéométrique à $T_\alpha$ ;
- $C_{min}$ : couple rhéométrique minimum ; et
- $C_{max}$ : couple rhéométrique maximum.

## Modules d'extension

On entend par module d'extension d'un matériau le module d'extension sécant apparent obtenu à une déformation d'extension uniaxiale donnée ε, en deuxième élongation (soit avec un cycle d'accommodation à la même déformation d'extension ε), mesuré à 23°C ; la vitesse de traverse est de 500 mm.min$^{-1}$ (norme ASTM D412). On appelle ce module le module E.

$$E = \frac{\sigma}{\varepsilon} = \frac{F}{S_0 \varepsilon}$$ ; avec $S_0$ section initiale de l'éprouvette, F force d'extension mesurée à la déformation considérée et $\sigma = F/S_0$ contrainte d'extension à la déformation considérée rapportée à la section initiale de l'éprouvette.

## Pertes hystérétiques ou PH

Les pertes hystérétiques (PH), ou hystérèse, sont mesurées par rebond à 60 deg. C et sont exprimées en %. On mesure les pertes hystérétiques, notées PH, en pourcentage de rebond au sixième rebond à 60°C conformément à la norme *ISO R17667*.

**Tableau 1**

| Composition | M01 (pce) |
|---|---|
| **IIR** | 100 |
| **N683** | 45-55 |
| **TDAE / OIL** | 25-35 |
| **Rigidité (23°C) à ε = 1** | |
| **cuisson optim**ale | 1,08 |
| **surcuisson** | 1,11 |
| **Delta** | **+3%** |
| **PH (60°C)** | |
| **cuisson optimale** | 21,4 |
| **surcuisson** | 18,9 |
| **Delta** | **-12%** |

(suite)

| Composition | M01 (pce) |
|---|---|
| **Taux de réversion** | **0** |

Le tableau 1 présente un exemple de formulation avec 100 pce (parties pour cent parties d'élastomère) de caoutchouc butyle non halogéné, de 45 à 55 pce d'un noir grossier et de l'ordre de 25 à 35 pce d'une huile plastifiante. Ce mélange M01 comporte aussi un système de vulcanisation adapté pour obtenir un module d'extension à 23°C de l'ordre de 1 à 1,1 MPa à une déformation d'extension de 100 %.

Ce mélange caoutchouteux a l'avantage de ne présenter aucune réversion, c'est-à-dire aucune diminution de rigidité en cas de surcuisson, ou cuisson au-delà des durées et températures usuelles de cuisson. En conséquence, lors de roulages à hautes vitesses et donc hautes températures, le maintien à ces hautes températures du mélange ne diminuera pas ses capacités de maintien mécanique d'un organe électronique.

De même les mesures de pertes hystérétiques du tableau 1 montrent que ce mélange a une hystérésis très faible et qui est ainsi favorable pour limiter les échauffements locaux liés à la présence d'un patch à la surface du pneumatique. Cette hystérésis n'augmente pas en cas de surcuisson, ce qui est aussi très favorable pour l'utilisation projetée.

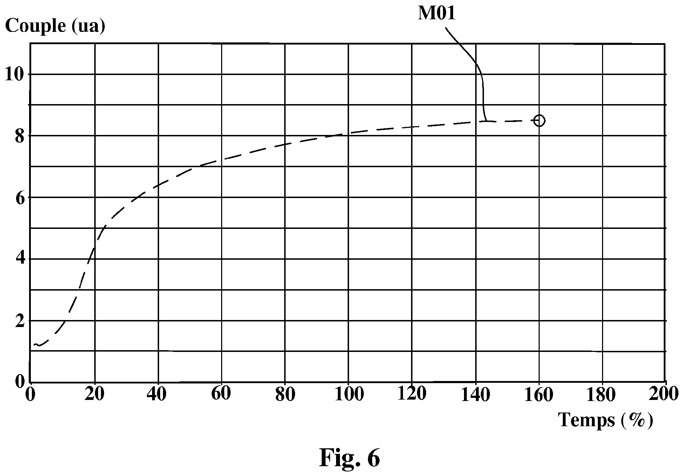

La figure 6 présente les résultats de rhéométrie de ce mélange.

Cette figure présente l'évolution du couple de rotation exprimé en unités arbitraires en fonction du temps de séjour dans la chambre du rhéomètre à une température de 165 °C. L'axe des abscisses est gradué en fonction de la durée de cuisson du pneumatique. L'indice 100 correspond à la durée de cuisson totale du pneumatique et l'indice 200 à deux fois cette durée.

La cuisson optimale de chaque mélange correspond au couple maximum enregistré. Au-delà de celui-ci, on entre en surcuisson.

On constate sur cette figure que le mélange à base de caoutchouc butyle M01 a une courbe de rhéométrie qui augmente continûment. Les mesures de rigidité en extension à 23°C confirment cette stabilité : on note une augmentation de 3% pour M01. Les mesures de PH à 60°C confirment ce résultat, la PH diminue de 12% pour M01.

Ces résultats confirment tout l'intérêt du mélange M01 à base de caoutchouc butyle qui présente une stabilité de rigidité en extension à la surcuisson avec une hystérésis en diminution.

Le patch 3 avec le mélange M01 a été placé sur des pneumatiques de dimension 305/30R20 103Y, asymétriques, de largeur axiale maximale 313 mm, testés avec un angle de carrossage de 2,5° afin de prendre en compte les impératifs techniques d'un véhicule auquel ils sont spécifiquement dédiés. Le test consiste en un roulage sur un volant métallique de 8,5 m de circonférence, à une pression de 3,2 bars et une charge de 587 daN régulées. Le pneumatique roule en paliers de vitesses croissantes, d'une durée de 20 minutes chacun, l'incrément en vitesse est de 10 km/h. Les pneumatiques sont classés en fonction de la vitesse maximale atteinte et de la durée de roulage pendant le dernier palier de vitesse atteint.

La géométrie du patch n'a pas évolué lors du test de vitesse limite. Ce pneumatique équipé d'un patch à base du mélange M01 a passé avec succès le test de vitesse limite sans cassure ni décollement de l'interface.

La figure 7 présente un patch 3 dont la cavité 15 est adaptée pour accueillir un organe électronique de forme oblongue, donc non-axisymétrique. Cela a l'avantage d'interdire toute rotation en service de l'organe électronique dans son patch de fixation.

Ce patch 3 comprend aussi avantageusement un transpondeur radiofréquence ou tag RFID (« Radio Frequency Identification ») 50 apte à enregistrer des données telles que l'identification du pneumatique et à les transmettre à un lecteur extérieur, notamment à un lecteur disposé dans l'organe électronique 3.

Le patch est avantageusement disposé à la surface du pneumatique avec sa plus grande longueur orientée axialement ce qui permet de limiter les efforts lors de la mise à plat du pneumatique.

## Revendications

**1.** Patch caoutchouteux (3) de fixation d'un organe électronique à la surface d'un pneumatique (1) comportant une semelle (11) et une paroi de maintien (12) liée à ladite semelle (11) et définissant un volume interne (15) apte à accueillir ledit organe électronique, la paroi de maintien (12) comportant une ouverture (13) adaptée à l'insertion et à l'extraction dudit organe électronique dans le volume interne (15); **caractérisé en ce que** ledit patch caoutchouteux (3) est à base d'un caoutchouc butyle non-halogéné, **en ce que** le caoutchouc butyle non-halogéné est le seul élastomère du mélange constituant dudit patch **et en ce que** la surface extérieure (16) de ladite semelle (11) dudit patch caoutchouteux (3) a une forme torique convexe dont le rayon de courbure le plus petit selon les directions principales de la surface torique est compris entre 0,2 et 0,6 mètres.

**2.** Patch caoutchouteux (3) selon la revendication 1, dans lequel la surface radialement extérieure de ladite paroi de maintien (12) dudit patch caoutchouteux (3) comporte une nervure (34).

**3.** Patch caoutchouteux (3) selon l'une quelconque des revendications précédentes, comportant un transpondeur radiofréquence (50).

**4.** Patch caoutchouteux (3) selon l'une des revendications précédentes, dans lequel la paroi de maintien (12) comprend, opposée à la semelle (11), une ouverture (13) avec un rebord de maintien (14) dudit organe électronique.

**5.** Patch caoutchouteux (3) selon l'une quelconque des revendications précédentes, dans lequel ledit volume interne est adapté pour accueillir un organe électronique de forme oblongue.

**6.** Patch caoutchouteux (3) selon la revendication 5, dont le volume interne a une section de forme oblongue parallèle à ladite semelle (11).

**7.** Pneumatique (1) comportant fixé sur sa surface intérieure (2) un patch caoutchouteux (3) selon l'une des revendications 1 à 6.

**8.** Pneumatique (1) comportant fixé sur sa surface intérieure (2) un patch caoutchouteux (3) selon la revendication 6, dans lequel la plus grande longueur de ladite section dudit volume interne est orientée selon une direction parallèle à l'axe naturel de rotation dudit pneumatique (1).

**9.** Procédé de fixation d'un organe électronique à la surface interne (2) d'un pneumatique (1), ledit pneumatique (1) étant réalisé par assemblage successif de ses constituants sur un noyau rigide, comportant les étapes suivantes :

- considérer un patch caoutchouteux (3) selon l'une quelconque des revendications 1 à 6 ;
- prévulcaniser ledit patch caoutchouteux (3) à un indice d'avancement de vulcanisation alpha supérieur à 0,5 ;
- mettre en place le patch caoutchouteux (3) prévulcanisé dans une cavité ménagée à la surface dudit noyau rigide et adaptée à la géométrie dudit patch caoutchouteux (3) ;
- mettre en place successivement l'ensemble des constituants du pneumatique (1) sur le noyau rigide pour obtenir un pneumatique (1) non vulcanisé ;
- vulcaniser le pneumatique (1) dans un moule de cuisson ; et
- sortir le pneumatique (1) du moule de cuisson.

**10.** Procédé selon la revendication 9, dans lequel l'indice d'avancement de vulcanisation alpha dudit patch caoutchouteux (3) prévulcanisé est inférieur à 0,9.

**11.** Procédé selon l'une des revendications 9 et 10, dans lequel l'indice d'avancement de vulcanisation alpha dudit patch caoutchouteux (3) prévulcanisé est compris entre 0,7 et 0,8.

**12.** Procédé selon l'une quelconque des revendications 9 à 11 avec un patch caoutchouteux (3) selon l'une des revendications 1 à 6, dans lequel, avant de mettre en place le patch caoutchouteux (3) prévulcanisé dans une cavité ménagée à la surface dudit noyau rigide et adaptée à la géométrie dudit patch caoutchouteux (3), on place un objet rigide et inerte thermiquement de géométrie identique à la géométrie dudit organe électronique à l'intérieur du volume interne (15) dudit patch caoutchouteux (3) prévulcanisé.

**13.** Procédé selon la revendication 12, dans lequel, après avoir sorti le pneumatique (1) dudit moule de cuisson, on retire l'objet rigide et inerte thermiquement du volume interne (15) du patch caoutchouteux (3) et on insère à l'intérieur du volume interne (3) dudit patch caoutchouteux (3) ledit organe électronique.


**Patentansprüche**

**1.** Kautschukpatch (3) zum Befestigen eines elektronischen Elements an der Oberfläche eines Luftreifens (1), aufweisend eine Sohle (11) und eine Haltewand (12), die mit der Sohle (11) verbunden ist und ein Innenvolumen (15) definiert, das zum Aufnehmen des elektronischen Elements geeignet ist, wobei die Haltewand (12) eine Öffnung (13) aufweist, die zum Einführen und Herausnehmen des elektronischen Elements in das bzw. aus dem Innenvolumen (15) geeignet ist; **dadurch gekennzeichnet, dass** der Kautschukpatch (3) auf einem nicht halogenierten Butylkautschuk basiert, dass der nicht halogenierte Butylkautschuk das einzige Elastomer der Mischung ist, aus welcher der Patch besteht, und dass die Außenoberfläche (16) der Sohle (11) des Kautschukpatches (3) eine konvexe torische Form hat, deren kleinster Krümmungsradius entlang der Hauptrichtungen der torischen Oberfläche zwischen 0,2 und 0,6 Meter beträgt.

**2.** Kautschukpatch (3) nach Anspruch 1, bei dem die radial äußere Oberfläche der Haltewand (12) des Kautschukpatches (3) eine Rippe (34) aufweist.

**3.** Kautschukpatch (3) nach einem der vorhergehenden Ansprüche, der einen Funkfrequenztransponder (50) aufweist.

**4.** Kautschukpatch (3) nach einem der vorhergehenden Ansprüche, bei dem die Haltewand (12), entgegengesetzt zur Sohle (11), eine Öffnung (13) mit einer Halteeinfassung (14) für das elektronische Element umfasst.

**5.** Kautschukpatch (3) nach einem der vorhergehenden Ansprüche, bei dem das Innenvolumen zum Aufnehmen eines elektronischen Elements von länglicher Form geeignet ist.

**6.** Kautschukpatch (3) nach Anspruch 5, dessen Innenvolumen einen Querschnitt von länglicher Form parallel zu der Sohle (11) hat.

**7.** Luftreifen (1), der an seiner Innenoberfläche (2) befestigt einen Kautschukpatch (3) nach einem der Ansprüche 1 bis 6 aufweist.

**8.** Luftreifen (1), der an seiner Innenoberfläche (2) befestigt einen Kautschukpatch (3) nach Anspruch 6 aufweist, bei dem die größte Länge des Querschnitts des Innenvolumens entlang einer Richtung parallel zur natürlichen Rotationsachse des Luftreifens (1) ausgerichtet ist.

**9.** Verfahren zum Befestigen eines elektronischen Elements an der Innenoberfläche (2) eines Luftreifens (1), wobei der Luftreifen (1) durch aufeinanderfolgendes Montieren seiner Komponenten auf einen starren Kern ausgeführt wird, aufweisend die folgenden Schritte:

  - Bereitstellen eines Kautschukpatches (3) nach einem der Ansprüche 1 bis 6;
  - Vorvulkanisieren des Kautschukpatches (3) mit einem Vulkanisierungsfortschrittsindex Alpha von mehr als 0,5;
  - Positionieren des vorvulkanisierten Kautschukpatches (3) in einem Hohlraum, der an der Oberfläche des starren Kerns ausgebildet ist und für die Geometrie des Kautschukpatches (3) geeignet ist;
  - aufeinanderfolgendes Positionieren sämtlicher Komponenten des Luftreifens (1) auf dem starren Kern, um einen nicht vulkanisierten Luftreifen (1) zu erhalten;
  - Vulkanisieren des Luftreifens (1) in einer Aushärteform; und
  - Entnehmen des Luftreifens (1) aus der Aushärteform.

**10.** Verfahren nach Anspruch 9, bei dem der Vulkanisierungsfortschrittsindex Alpha des vorvulkanisierten Kautschukpatches (3) kleiner als 0,9 ist.

**11.** Verfahren nach einem der Ansprüche 9 und 10, bei dem der Vulkanisierungsfortschrittsindex Alpha des vorvulkanisierten Kautschukpatches (3) zwischen 0,7 und 0,8 beträgt.

**12.** Verfahren nach einem der Ansprüche 9 bis 11 mit einem Kautschukpatch (3) nach einem der Ansprüche 1 bis 6, bei dem, vor dem Positionieren des vorvulkanisierten Kautschukpatches (3) in einem Hohlraum, der an der Oberfläche des starren Kerns ausgebildet ist und für die Geometrie des Kautschukpatches (3) geeignet ist, ein starrer und thermisch inerter Gegenstand mit einer Geometrie, die mit der Geometrie des elektronischen Elements identisch ist, in dem Innenvolumen (15) des vorvulkanisierten Kautschukpatches (3) platziert wird.

13. Verfahren nach Anspruch 12, bei dem, nachdem der Luftreifen (1) aus der Aushärteform entnommen wurde, der starre und thermisch inerte Gegenstand aus dem Innenvolumen (15) des Kautschukpatches (3) gezogen wird und das elektronische Element in das Innenvolumen (3) des Kautschukpatches (3) eingeführt wird.

**Claims**

1. Rubber patch (3) for attaching an electronic member to the surface of a tyre (1), comprising a base (11) and a retaining wall (12) connected to said base (11) and defining an internal volume (15) able to accommodate said electronic member, the retaining wall (12) comprising an opening (13) designed for the insertion and extraction of said electronic member into and from the internal volume (15), **characterized in that** said rubber patch (3) is based on a non-halogenated butyl rubber, **in that** the non-halogenated butyl rubber is the only elastomer in the compound of which the patch is made **and in that** the exterior surface (16) of said base (11) of said rubber patch (3) has a convex toric shape of which the smallest radius of curvature in the main directions of the toric surface is comprised between 0.2 and 0.6 metres.

2. Rubber patch (3) according to Claim 1, wherein the radially exterior surface of said retaining wall (12) of said rubber patch (3) comprises a rib (34).

3. Rubber patch (3) according to any one of the preceding claims, comprising a radiofrequency transponder (50).

4. Rubber patch (3) according to one of the preceding claims, wherein the retaining wall (12) comprises, at the opposite end from the base (11), an opening (13) with a retaining lip (14) for retaining said electronic member.

5. Rubber patch (3) according to any one of the preceding claims, wherein said internal volume is designed to accommodate an electronic member of oblong shape.

6. Rubber patch (3) according to Claim 5, the internal volume of which has a cross section of oblong shape parallel to said base (11).

7. Tyre (1) comprising, attached to its interior surface (2), a rubber patch (3) according to one of Claims 1 to 6.

8. Tyre (1) comprising, attached to its interior surface (2), a rubber patch (3) according to Claim 6, wherein the longest length of said cross section of said internal volume is oriented in a direction parallel to the natural axis of rotation of the tyre (1).

9. Method for attaching an electronic member to the internal surface (2) of a tyre (1), said tyre (1) being produced by successively building its constituent parts onto a rigid core, comprising the following steps:

   - considering a rubber patch (3) according to any one of Claims 1 to 6;
   - pre-vulcanizing said rubber patch (3) to a degree of curing alpha greater than 0.5;
   - placing the pre-vulcanized rubber patch (3) in a cavity formed on the surface of said rigid core and tailored to the geometry of said rubber patch (3);
   - successively placing all of the constituent parts of the tyre (1) on the rigid core in order to form a green tyre (1);
   - vulcanizing the tyre (1) in a curing mould; and
   - removing the tyre (1) from the curing mould.

10. Method according to Claim 9, wherein the degree of curing alpha of said pre-vulcanized rubber patch (3) is below 0.9.

11. Method according to one of Claims 9 and 10, wherein the degree of curing alpha of said pre-vulcanized rubber patch (3) is comprised between 0.7 and 0.8.

12. Method according to any one of Claims 9 to 11, with a rubber patch (3) according to one of Claims 1 to 6, wherein, before placing the pre-vulcanized rubber patch (3) in a cavity formed on the surface of said rigid core and tailored to the geometry of said rubber patch (3), a rigid and thermally inert object with a geometry identical to the geometry of said electronic member is placed inside the internal volume (15) of said pre-vulcanized rubber patch (3).

13. Method according to Claim 12, wherein after the tyre (1) has been removed from said curing mould, the rigid and thermally inert object is removed from the internal volume (15) of the rubber patch (3) and said electronic member is inserted inside the internal volume (3) of said rubber patch (3).

**Fig. 1**

**Fig. 2**

**Fig. 3**

**Fig. 7**

**Fig. 4**

**Fig. 5**

Fig. 6

**EP 3 774 407 B1**

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2346706 B1
- WO 2008116523 A
- EP 2845751 A
- EP 0264600 B1
- WO 2008116523 A1
- WO 9736724 A
- WO 9916600 A
- WO 03016387 A

- WO 03002648 A
- US 2005016651 A
- WO 03002649 A
- US 2005016650 A
- WO 2006125534 A
- WO 0210269 A
- WO 2016162345 A